# EUROPEAN PATENT SPECIFICATION

(11) **EP 0 367 556 B1**
(45) Date of publication and mention of the grant of the patent: **25.01.1995**
(21) Application number: 89311222.7
(22) Date of filing: 31.10.1989
(51) Int. Cl.: B60C 5/14

(54) **Pneumatic tyre**
Luftreifen
Bandage pneumatique

(30) Priority: 04.11.1988 JP 279559/88
(43) Date of publication of application: 09.05.1990
(73) Proprietor: SUMITOMO RUBBER INDUSTRIES LIMITED, Kobe-shi Hyogo-ken (JP)
(72) Inventor: Iuchi, Munenori, Kobe-shi Hyogo-ken (JP)
(74) Representative: Stewart, Charles Geoffrey

(56) References cited:
- EP-A- 0 029 120
- DE-A- 2 040 898
- DE-A- 3 042 350
- FR-A- 1 382 994
- US-A- 2 290 121

## Description

The present invention relates to a pneumatic tyre which is provided with an improved inner liner capable of reducing road noise.

Recently, great pressures have emerged especially for passenger cars to reduce the noise levels. In general, noise from the tyres comprises pattern noise caused by the tread pattern of the tyre, road noise which derives from the roughness of the road surface, and others such as squeal noise, slip noise, vibration noise, etc.

Road noise is the noise caused in a frequency range of about 50 to 400 Hz when running on a rough road surface, such noise when transmitted into the vehicle interior can cause resonance and discomfort.

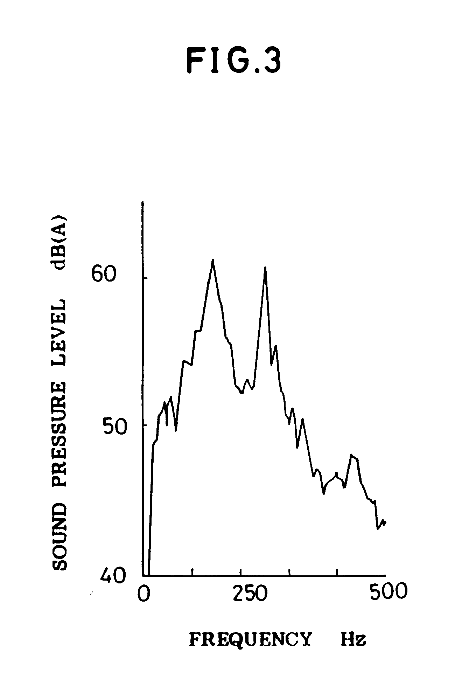

On the other hand, analysis of the frequency spectrum of the road noise has shown one or more peaks around 250 Hz as shown typically in Fig.3. Therefore, if there was a decrease in peak noise around 250 Hz then there would be a lowering of the road noise perceived in the car.

The present inventor, as a result of various experiments, discovered that the cause of the peak is the resonance of the doughnut-shaped air chamber enclosed by the inner surface of the tyre and the rim. It was confirmed that the road noise can be remarkably lowered by controlling this resonance of the air chamber, that is, vibration of the air in the tyre.

A pneumatic tyre having a porous damper layer disposed on the inner surface of the tyre main body is disclosed by DE-A-2040989.

It is the object of the present invention to provide a pneumatic tyre having reduced road noise in this particular range in the vicinity of 250 Hz, in a simple way and without sacrificing or changing the tyre characteristics especially tyre dynamic performance.

According to the present invention, a pneumatic tyre comprises a hollow toroidal main body and an inner liner disposed on the inner surface of the tyre main body and united to the tyre main body in a tyre vulcanising process characterised in that the inner liner is disposed to cover the entire inner surface of the tyre main body and has a double-layered structure comprising an airtight layer disposed on the inner surface of the tyre main body and a porous damper layer of thickness in the range 4mm to 10mm disposed inward of the airtight layer, the porous damper layer being adapted to decrease the noise level in the vicinity of 250Hz and having a great number of open cavities on its inner surface facing the interior of the tyre, and the damper layer of the inner layer is made of a material which become porous by the heating of the tyre in the vulcanising process.

Accordingly, the damper layer lowers the Q-factor of the tyre inner chamber in resonance. Thus if the tyre inside wall resounds, the sound or reflected sound or echo is absorbed and attenuated by the inner liner.

Further, the damper layer may lower the transmission of vibration of the tyre main body to the air in the tyre inner chamber.

An embodiment of the present invention will now be described, by way of example only, with reference to the drawings, in which:-
Fig.1. is a sectional view showing an embodiment of the present invention
Fig.2. is a diagram showing the effect of the present invention and
Fig.3 is a diagram showing the frequency spectrum of road noise in a prior art tyre.

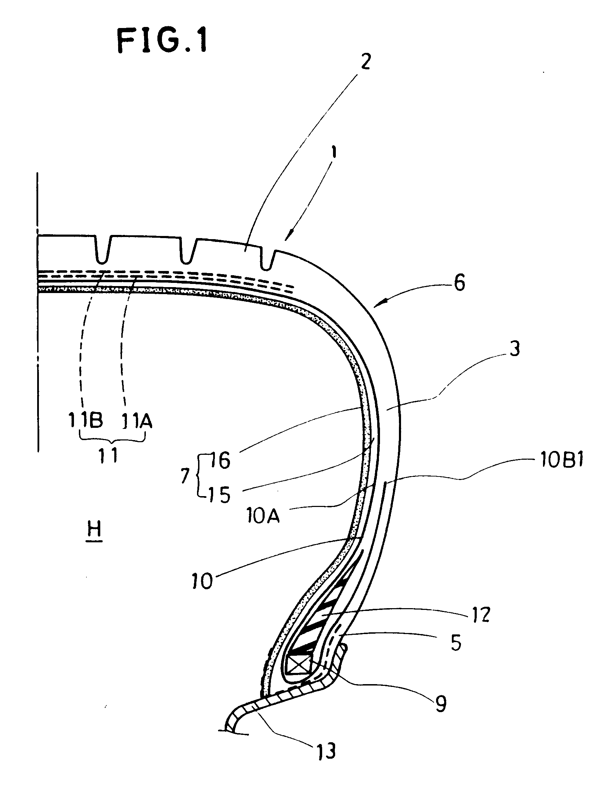

Fig.1. shows a radial tyre for a passenger car comprising a toroidal hollow main body 6 and an inner liner 7 disposed on the inside surface of the main body.

The tyre main body 6 has a pair of bead portions 5, a tread portion 2 provided with a tread pattern or grooves on the outer surface thereof, and a pair of sidewall portions 3 extending therebetween. The tyre main body 6 is reinforced by a pair of bead cores 9 disposed one in each bead portion 5, a carcass 10 turned up in both edges around the bead cores 9 from the inside to the outside thereof to form a turned up parts 10B and a main part 10A extending between the bead portions 5 through the tread portion 2 and the sidewall portions 3. A belt layer 11 is disposed radially outside the crown portion of the carcass 10 the stiffness the tread portion 2.

The carcass 10 is composed of at least one ply of cords attached at an angle between 50 and 90 degrees with respect to the circumferential direction of the tyre. Organic fibre cords such as synthetic resin, inorganic fibre cords such as metal or the like can be used as the carcass cords.

Each of the carcass turned up parts 10B is extended into its respective sidewall portion 3 and between the carcass main part 10A and each of the turned up parts 10B a bead apex 12 is disposed extending radially outwardly from its bead core 9 to increase the transverse stiffness of the tyre.

The belt layer 11 is disposed on the crown of the carcass 10, and composed of, for example, two plies 11A and 11B of organic or inorganic stiff cords arranged at a small angle of 0 to 35 degrees to the circumferential direction of the tyre.

The width of the belt layer is at least 0.75 times the tread width so as to provide a hoop effect over the entire width of the treads thus to stiffen and reinforce the tread 2.

On the inner surface of the tyre main body, in general and in this example, on the inner surface of the carcass main part 10A, the inner liner 7 is disposed. The primary object of the inner liner 7 is to provide air-tightness for the tyre which is this a tubeless tyre, that is, to prevent leakage of the air in the doughnut-shaped tyre inner chamber H enclosed by the tyre and its rim 13 when the tyre us mounted there on. The special new object of the inner liner 7 is to dampen the resonance of sound in the above mentioned chamber H. To achieve this objective, the inner liner 7 has a double layered structure consisting of an airtight layer 15 and a damper layer 16.

The damper layer 16 is located on the innermost side so that the inner surface thereof faces the above-mentioned chamber H.

The airtight layer 15 is located outside the damper later 16 and inside the tyre main body or carcass and covers the entire inner surface thereof. The airtight layer 15 is made of a soft rubber composition, such as butyl rubber, halogen rubber or the like, which excels in air tightness.

The damper layer 16 in this embodiment is made of porous material having uniformily distributed tiny independent cavities, like sponge rubber the mean diameter of which is not more than 10 microns. A great number of the cavities are open at the inner surface of the damper layer 16 to provide pores thereon. The base for the porous material is a rubber composition which is of the same kind as the airtight layer 15, but it is also possible to use a different kind of rubber composition. Further, various synthetic resins may be used for the base of the porous material aside from rubber composition.

The thickness of the damper layer 16 is preferably in a range of 4mm to 10mm, and it should be nearly constant so as not to disturb the tyre dynamic balance.

The space rate of the porous material which is the ratio of the total volume of the space including the cavities and the pores (that is, the opened cavities) to the apparent whole volume, is preferably not less than 20%. If the rate is less than 20% and/or the diameter is over 10 microns, the effect to damp region resonance in the tyre air chamber is inferior.

The above mentioned porous material can be made by mixing foaming agent (for example, dinitrosa pentamethylene tetramine, azodicarbonamide, azobisisobutylonitrile, toluenesulfonyl hydrazide and the like) into the rubber base in a raw state, and then heating it in a vulcanising process. In practice, the porous material and the airtight rubber material are pressure-bonded into one body, and this layered material is applied to the inner surface of the carcass to form a raw tyre. Then the raw tyre is vulcanised and the heat of vulcanisation causes the foaming agent to produce the porous damper layer 16.

Thus it is possible to make the tyre 1 of the invention in substantially the same process as that for a normal pneumatic tyre, without adding any complex process, thereby preventing the production efficiency from being lowered and the product cost from being increased.

In this embodiment, therefore, the above-mentioned independent cavities are tiny foams.

Working example tyres of size 205/60R15 having the structure shown in Fig.1 and reference tyres having the same structure with the exception that no damper layer 16 provided, were prepared. The damper layer 16 was made of a porous rubber material having independent cavities, and the space rate and thickness thereof were 50% and 7mm, respectively.

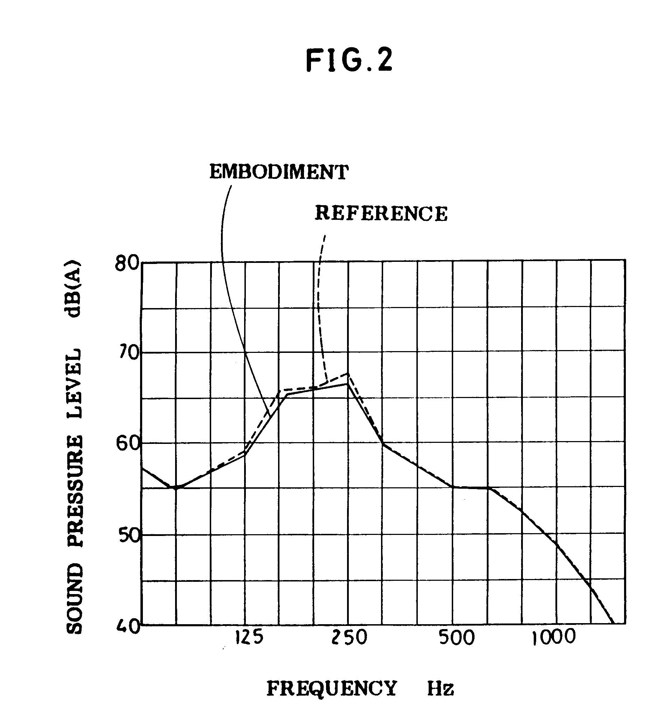

Each test tyre was mounted on 6 1/2 JJX15 rim and inflated to a normal pressure of 2kg/mm² and they were installed in a 2000cc passenger car, and then the road noise was measured in the interior of the car while running a rugged asphalt paved road at 50 km/h. Fig.2 shows the result of the frequency analysis. As apparent therefrom, the noise level of the working example tyre was decreased in the vicinity of 250 Hz over a relatively wide range to decrease the power of the noise and as the result, the road noise was remarkably reduced.

As described above, since the pneumatic tyre of the present invention is provided with an inner liner having a porous damper layer 16 the echo by the inside wall of the tyre is attenuated and the noise is absorbed by the porous surface to lower the resonance, and further the transmission of vibration of the tyre main body, which is a main source of the peak, to the air in the tyre inner chamber is also lessened by the porous material. As a result, the road noise, in particular, the peak caused around 250 Hz by the resonance is reduced. Furthermore, this structure is extremely simple, and the tyre characteristics are not sacrificed, and it is safe.

The present invention can be applied to all kinds of pneumatic tyres having an air chamber regardless of carcass structure such as radial or cross ply structure, and size and usage.

## Claims

1. A pneumatic tyre (1) comprising a hollow toroidal main body and an inner liner (7) disposed on the inner surface of the tyre main body and united to the tyre main body in a tyre vulcanising process characterised in that the inner liner (7) is disposed to cover the entire inner surface of the tyre main body and has a double-layered structure comprising an airtight layer (15) disposed on the inner surface of the tyre main body and a porous damper (16) layer of thickness in the range 4mm to 10mm disposed inward of the airtight layer (15), the porous damper layer (16) being adapted to decrease the noise level in the vicinity of 250 Hz and having a great number of open cavities on its inner surface facing the interior of the tyre, and the damper layer (16) of the inner liner (7) is made of a material which becomes porous by the heating of the tyre in the vulcanising process.

2. A pneumatic tyre according to claim 1 characterised in that the damper layer (16) is made of a porous material having independent cavities the mean diameter of which is not more than 10 microns.

3. A pneumatic tyre according to claim 1 characterised in that the damper layer (16) is made of porous material having continuous cavities.

4. A pneumatic tyre according to claims 1, 2 or 3 characterised in that the percentage of the total volume of the space formed in the porous material, inclusive of the cavities, with respect to the apparent whole volume is not less than 20%.

## Patentansprüche

1. Ein Luftreifen (1) mit einem hohlen toroidalen Hauptkörper und einer inneren Auskleidung (7), die an der Innenfläche des Reifenhauptkörpers angeordnet und mit dem Hauptreifenkörper in einem Reifen-Vulkanisationsverfahren vereinigt ist,
dadurch **gekennzeichnet,**
daß die innere Auskleidung (7) angeordnet ist, um die gesamte Innenfläche des Reifenhauptkörpers abzudecken, und einen doppelschichtigen Aufbau mit einer luftdichten Schicht (15), welche an der Innenfläche des Reifenhauptkörpers angeordnet ist, und einer porösen Dämpfungsschicht (16) von einer Dicke in dem Bereich von 4 mm bis 10 mm, die innerhalb der luftdichten Schicht (15) angeordnet ist, besitzt, wobei die poröse Dämpfungsschicht (16) geeignet ist, den Geräuschpegel in der Nähe von 250 Hz zu verringern und eine große Anzahl von offenen Ausnehmungen an ihrer Innenfläche hat, welche dem Innenraum des Reifens zugewandt sind, und wobei die Dämpfungsschicht (16) der inneren Auskleidung (7) aus einem Material hergestellt ist, das durch die Erwärmung des Reifens in dem Vulkanisationsverfahren porös wird.

2. Ein Luftreifen nach Anspruch 1,
dadurch **gekennzeichnet,**
daß die Dämpfungsschicht (16) aus einem porösen Material hergestellt ist, das unabhängige Ausnehmungen besitzt, deren mittlerer Durchmesser nicht mehr als 10 µm beträgt.

3. Ein Luftreifen nach Anspruch 1,
dadurch **gekennzeichnet,**
daß die Dämpfungsschicht (16) aus einem porösen Material mit kontinuierlichen Ausnehmungen hergestellt ist.

4. Ein Luftreifen nach Anspruch 1, 2 oder 3,
dadurch **gekennzeichnet,**
daß der Prozentsatz des Gesamtvolumens des Leerraums, der in dem porösen Material durch die Ausnehmungen gebildet ist, zu dem erscheinenden Gesamtvolumen nicht kleiner als 20 % ist.

## Revendications

1. Pneumatique (1) comprenant un corps principal toroïdal creux et un revêtement interne (7) placé à la surface interne du corps principal du pneumatique et associé à celui-ci dans une opération de vulcanisation du pneumatique, caractérisé en ce que le revêtement interne (7) est disposé afin qu'il recouvre toute la surface interne du corps principal du pneumatique et possède une structure à deux couches comprenant une couche hermétique (15) placée à la surface interne du corps principal du pneumatique et une couche poreuse (16) d'amortissement ayant une épaisseur comprise entre 4 et 10 mm placée à l'intérieur de la couche hermétique (15), la couche poreuse (16) d'amortissement étant adaptée à la réduction du niveau de bruit à proximité de 250 Hz et ayant un grand nombre de cavités débouchant à la surface interne tournée vers l'intérieur du pneumatique, et la couche (16) d'amortissement du revêtement interne (7) est formée d'une matière qui devient poreuse par chauffage du pneumatique dans l'opération de vulcanisation.

2. Pneumatique selon la revendication 1, caractérisé en ce que la couche d'amortissement (16) est formée d'une matière poreuse ayant des cavités indépendantes dont le diamètre moyen ne dépasse pas 10 µm.

3. Pneumatique selon la revendication 1, caractérisé en ce que la couche d'amortissement (16) est formée d'une matière poreuse ayant des cavités continues.

4. Pneumatique selon la revendication 1, 2 ou 3, caractérisé en ce que le pourcentage du volume total de l'espace formé par la matière poreuse, y compris les cavités, par rapport au volume apparent n'est pas inférieur à 20 %.
